# EUROPEAN PATENT APPLICATION

(11) **EP 3 868 203 A1**
(43) Date of publication of application: **25.08.2021**
(21) Application number: 19874245.4
(22) Date of filing: 16.10.2019
(51) Int. Cl.: A01M 7/00, B05B 17/00

(54) **CHEMICAL SPAYING DEVICE**

(30) Priority: 17.10.2018 JP 2018195799
(71) Applicant: Yanmar Power Technology Co., Ltd., Osaka-shi Osaka 530-0013 (JP); Arimitsu Industry Co., Ltd., Osaka-shi, Osaka 537-0001 (JP)
(72) Inventor: YAMAZAKI Ryosuke, Osaka-shi, Osaka 530-0013 (JP); NOGUCHI Daisuke, Osaka-shi, Osaka 530-0013 (JP); YOSHIDA Yoshihiro, Osaka-shi, Osaka 537-0001 (JP)
(74) Representative: Vigand, Philippe
(86) International application number: PCT/JP2019/040541
(87) International publication number: WO 2020/080377

(57) **Abstract**

Provided is a chemical spraying device which can, even when a work vehicle travels on sloped work ground, rough roads or the like, spray a chemical onto crops onto which the chemical is to be sprayed, the spraying being performed without contact with the crops. A chemical spraying device (10) capable of being mounted on a work vehicle (1) is provided with: a chemical tank (11); chemical ejecting sections (12) for ejecting a chemical supplied from the chemical tank (11); a plurality of first ejection support sections (31) which have the chemical ejecting sections (12), extend in the top-bottom direction, and are oriented longitudinally; and a second ejection support section (32) extending in the left-right direction from the chemical tank (11) side and supporting the plurality of first ejection support sections (31). Each of the plurality of first ejection support sections (31) is provided to be rockable about an axis extending in the front-rear direction relative to the second ejection support section (32).

## Description

### TECHNICAL FIELD

The present invention relates to a chemical spraying device mountable on a work vehicle.

### BACKGROUND ART

A chemical spraying device such as described above includes a chemical tank and chemical ejecting sections that eject a chemical supplied from the chemical tank. The chemical spraying device is mounted, for example, on a rear side of a work vehicle. When spraying the chemical onto chemical spray target portions of a crop, the chemical spraying device sprays the chemical onto the crop at the rear side of the work vehicle while the work vehicle is running by ejecting the chemical in the chemical tank from the chemical ejecting sections (for example, see Patent Literature 1).

The chemical spraying device described in Patent Literature 1 includes a plurality of first ejection support sections and a pair of left and right second ejection support sections in a vertical posture. The first ejection support sections have the chemical ejecting sections for supporting the chemical ejecting sections and extend in an up-down direction. The second ejection support sections extend from the inner side to the outer side of the work vehicle in a left-right direction and support the first ejection support sections. Each of the pair of left and right second ejection support sections is a lateral support section extending in the left-right direction of the work vehicle, and has a middle portion and an outer end portion. Each of the pair of left and right second ejection support sections has a first ejection support section extending from the middle portions and the outer end portions and downward of the second ejection support sections in a vertical posture.

### CITATION LIST

### Patent Literature

Patent Literature 1: Japanese Examined Utility Model (Registration) Application Publication No. H7-53738

### DISCLOSURE OF INVENTION

### PROBLEMS TO BE SOLVED BY THE INVENTION

In the device described in Patent Literature 1, the first ejection support sections have the chemical ejecting sections extending from the lateral second ejection support sections downward in a vertical posture. When the work vehicle is running on a flat work area, therefore, the orientation of the first ejection support sections is in line with an up-down direction relative to the work area. This allows the first ejection support sections to be parallel or substantially parallel to an erect crop planted in the work area, so that the chemical can be suitably sprayed onto the crop through the chemical ejecting sections on the first ejection support sections.

However, some work areas are flat, and others are, for example, slope or rough, having uneven height in the left-right direction of the work vehicle. In a situation in which the work vehicle is running on a slope ground or a rough road such as described above, the second ejection support sections are inclined in the left-right direction in accompaniment to the inclination of the work vehicle in the left-right direction. Consequently, the first ejection support sections are also inclined in the left-right direction. As a result, the first ejection support sections are at an angle to the erect crop planted in the work area. In such a situation, it is difficult to dispose the first ejection support sections in positions suitable for spraying the chemical onto the crop. In some cases, the first ejection support sections can come in contact with the crop.

In view of the above-described circumstances, an object of the present invention is mainly to provide a chemical spraying device capable of spraying a chemical onto a crop while preventing or reducing contact thereof with chemical spray target portions of the crop even when a work vehicle is running on, for example, a slope work area or a rough road.

### MEANS FOR SOLVING THE PROBLEMS

A first characteristic configuration of the present invention is that a chemical spraying device mountable on a work vehicle includes: a chemical tank; chemical ejecting sections that eject a chemical supplied from the chemical tank; a plurality of first ejection support sections having the chemical ejecting sections and extending in an up-down direction in a vertical posture; and a second ejection support section extending in a left-right direction from the chemical tank and supporting the plurality of first ejection support sections.

Each of the plurality of first ejection support sections is swingable relative to the second ejection support section about an axis in line with a front-rear direction.

According to this configuration, each of the plurality of first ejection support sections swings relative to the second ejection support section about the axis in line with the front-rear direction. Thus, the chemical spraying device can adjust the orientation of the first ejection support sections relative to the second ejection support section in the left-right direction. In a situation in which the work area is a slope work area or a rough road, for example, the orientation of the first ejection support sections can be adjusted to be parallel or substantially parallel to an erect crop planted in the work area through each of the first ejection support sections swinging relative to the second ejection support section about the axis in line with the front-rear direction. This allows the first ejection support sections to be in positions suitable for spraying the chemical onto the crop. The chemical spraying device can therefore appropriately spray the chemical onto the crop while preventing or reducing contact thereof with chemical spray target portions of the crop.

A second characteristic configuration of the present invention is that each of the plurality of first ejection support sections is swingable under its own weight relative to the second ejection support section, in a hanging position extending downward from the second ejection support section.

According to this configuration, each of the plurality of first ejection support sections can swing under its own weight into the hanging position in which the first ejection support section extends downward from the second ejection support section. This eliminates the need to provide a swing driver for causing each of the first ejection support sections to swing into the hanging position, and allows for a simple configuration and cost reduction.

A third characteristic configuration of the present invention is that the chemical spraying device includes a swing resistance section that provides swing resistance when the respective first ejection support sections swing relative to the second ejection support section.

According to this configuration, the swing resistance sections provide swing resistance when the respective first ejection support sections swing relative to the second ejection support section. Thus, the chemical spraying device can restrict the first ejection support sections from rapidly swinging, so that the first ejection support sections swing in a stable manner.

A fourth characteristic configuration of the present invention is that the chemical spraying device includes a swing range restriction section that restricts ranges of swing of the respective first ejection support sections relative to the second ejection support section.

According to this configuration, the swing range restriction sections can prevent the respective first ejection support sections from overly swinging when the first ejection support sections swing relative to the second ejection support section, preventing the first ejection support sections from coming in contact with other sections, for example. Thus, the chemical spraying device can cause the first ejection support sections to appropriately swing while preventing or reducing damage to the first ejection support sections.

In A fifth characteristic configuration of the present invention, the second ejection support section extends both leftward and rightward in the left-right direction from the chemical tank, and supports the first ejection support sections at a plurality of locations thereon in the left-right direction. The chemical spraying device includes a seesaw swing support section that supports the second ejection support section in a manner that enables seesaw swing of the second ejection support section relative to the chemical tank about an axis in line with the front-rear direction.

According to this configuration, the seesaw swing support section causes seesaw swing of the second ejection support section relative to the chemical tank about the axis in line with the front-rear direction. Thus, in a situation in which the work area is a slope work area or a rough road, for example, the chemical spraying device can cause seesaw swing of the second ejection support section depending on the slope angle and the like of a contact surface of the work area. Since the second ejection support section supports the first ejection support sections at a plurality of locations thereon in the left-right direction, each of the plurality of first ejection support sections can swing relative to the seesaw-swinging second ejection support section about the axis in line with the front-rear direction. This makes it possible to adjust the second ejection support section to an appropriate orientation as well as adjusting the first ejection support sections even in a situation in which the work area is a slope work area or a rough road. Thus, the chemical spraying device can appropriately spray the chemical onto the crop while preventing or reducing contact thereof with chemical spray target portions of the crop.

A sixth characteristic configuration of the present invention is that the chemical spraying device includes: a left-right swing support section that supports the respective first ejection support sections in a manner that enables the first ejection support sections to swing in the left-right direction relative to the second ejection support section about the axes in line with the front-rear direction; a front-rear swing support section that supports the respective first ejection support sections in a manner that enables the first ejection support sections to swing in the front-rear direction relative to the left-right swing support sections about axes in line with the left-right direction; a biasing section that exerts a biasing force on the respective first ejection support sections to cause the first ejection support sections to swing frontward and that allows the respective first ejection support sections to swing rearward against the biasing force, when the first ejection support sections swing in the front-rear direction relative to the left-right swing support sections about the axes in line with the left-right direction; and a swing position restriction section that restricts swing positions of the respective first ejection support sections to use positions by restricting frontward swing of the first ejection support sections through contact of a contact portion with the first ejection support sections and that allows the respective first ejection support sections to swing rearward without the contact portions coming in contact with the first ejection support sections.

According to this configuration, the left-right swing support sections enable the first ejection support sections to swing relative to the second ejection support section about the axes in line with the front-rear direction. Not only that, the front-rear swing support sections enable the first ejection support sections to swing relative to the left-right swing support sections about the axes in line with the left-right direction.

When the first ejection support sections swing about the axes in line with the left-right direction, the first ejection support sections are not allowed to swing to any swing positions. Rather, the swing positions of the first ejection support sections are restricted to use positions through contact of the contact portions of the respective swing position restriction sections with the first ejection support sections using the biasing force of the biasing sections. Thus, the chemical spraying device can appropriately spray the chemical onto the crop using the first ejection support sections in the use positions.

The biasing sections and the swing position restriction sections allow the first ejection support sections in the use positions to swing rearward about the axes in line with the left-right direction. That is, even when something extraneous, such as a chemical spray target portion of the crop or another foreign object, hits any of the first ejection support sections, for example, the extraneous thing pushes the first ejection support section rearward to cause the first ejection support section to swing from the use position into an upper rear retracted position. Thus, damage to the first ejection support sections can be prevented or reduced.

### BRIEF DESCRIPTION OF DRAWINGS

FIG. 1 is a side view of a chemical spraying device mounted on a work vehicle.
FIG. 2 is a rear view of the chemical spraying device mounted on the work vehicle on a flat work area.
FIG. 3 is a rear view of the chemical spraying device mounted on the work vehicle on a slope work area.
FIG. 4 is a front perspective view of the chemical spraying device.
FIG. 5 is a rear perspective view of the chemical spraying device.
FIG. 6 is a perspective view of main components of the chemical spraying device.
FIG. 7 is a perspective view of main components of the chemical spraying device.
FIG. 8 is a perspective view of a supporting configuration for a second ejection support section to support a first ejection support section viewed from an inner side in a left-right direction.
FIG. 9 is a perspective view of the supporting configuration for the second ejection support section to support the first ejection support section viewed from an outer side in the left-right direction.

### DESCRIPTION OF EMBODIMENTS

The following describes a chemical spraying device according to an embodiment of the present invention mounted on a work vehicle on the basis of the drawings.

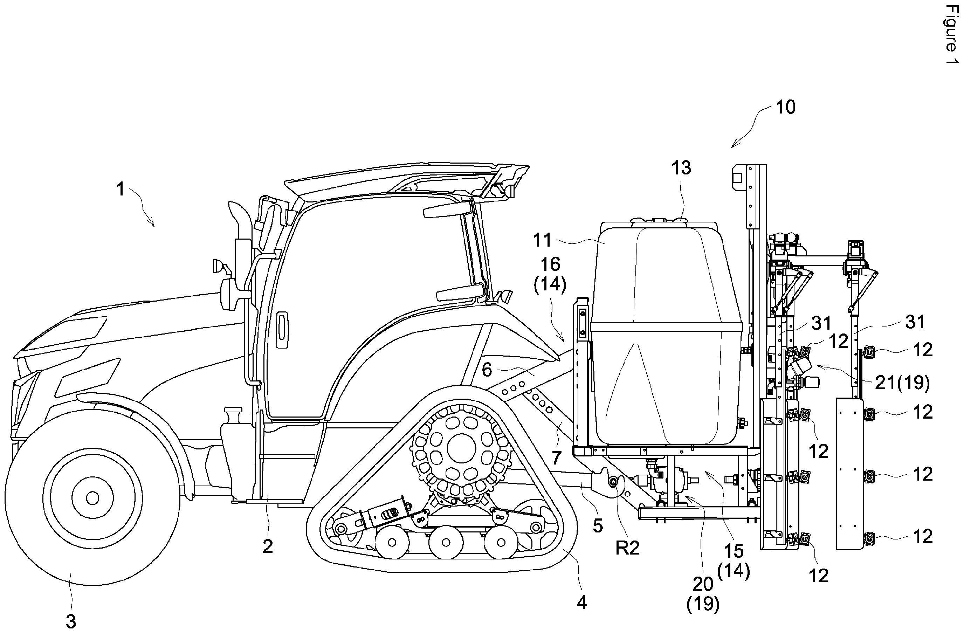

As illustrated in FIG. 1, this chemical spraying device 10 is mountable on a rear portion of a tractor 1, which is a work vehicle. Although the tractor 1 is adopted as the work vehicle, any passenger work vehicles such as a passenger rice transplanter or a combine harvester can be adopted.

A front portion of a vehicle body 2 of the tractor 1 is supported by a pair of left and right front wheels 3, and a rear portion of the vehicle body 2 is supported by a pair of left and right crawler devices 4. The rear portion of the vehicle body 2 of the tractor 1 includes a three-point link mechanism including a pair of left and right lower links 5 and an upper link 6. The chemical spraying device 10 is attachable to and detachable from the three-point link mechanism. The rear portion of the vehicle body 2 of the tractor 1 includes a lifting device (not shown) having a hydraulic device such as a lifting cylinder. The chemical spraying device 10 can be lifted or lowered through the lifting device lifting and lowering the three-point link mechanism.

In the following description, a left-right direction of a chemical tank 11 is the same as a left-right direction of the tractor 1, and a front-rear direction of the chemical tank 11 is the same as a front-rear direction of the tractor 1. A right side in the left-right direction refers to a right side relative to the tractor 1 moving forward, and a left side in the left-right direction refers to a left side relative to the tractor 1 moving forward. An outer side in the left-right direction refers to an outer side in the left-right direction relative to the tractor 1, and an inner side in the left-right direction refers to an inner side in the left-right direction relative to the tractor 1.

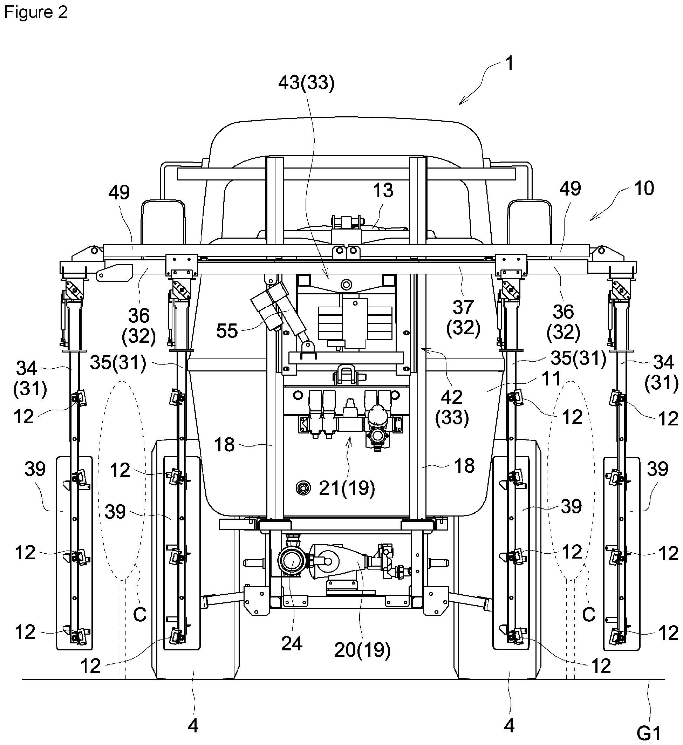

As illustrated in FIGS. 1 and 2, the chemical spraying device 10 includes the chemical tank 11 that stores a chemical and chemical ejecting sections 12 that spray the chemical supplied from the chemical tank 11. As illustrated in FIG. 2, the chemical ejecting sections 12 are located further rearward than the chemical tank 11 and are distributed to be on the left side and on the right side in the left-right direction. The chemical ejecting sections 12 on the left side are distributed to be on the outer side and on the inner side in the left-right direction. The chemical ejecting sections 12 on the right side are distributed to be on the outer side and on the inner side in the left-right direction. Thus, the positions of the chemical ejecting sections 12 fall under any of the following four locations in the left-right direction: left outer side, left inner side, right inner side, and right outer side.

When the chemical spraying device 10 sprays the chemical onto chemical spray target portions of a crop C, as illustrated in FIG. 2, the tractor 1 is driven to run while having the chemical spray target portions of the crop C between the chemical ejecting sections 12 located on the left outer side and the chemical ejecting sections 12 located on the left inner side, and between the chemical ejecting sections 12 located on the right outer side and the chemical ejecting sections 12 located on the right inner side.

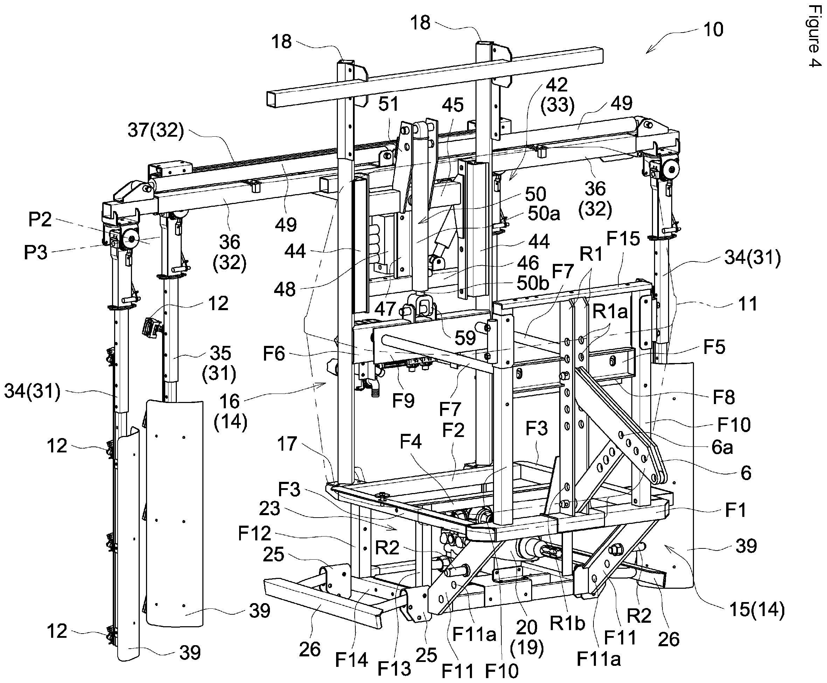

Note here that various members are connected and fixed using, for example, connectors such as bolts and nuts in the chemical spraying device 10, but such connectors are omitted in the illustration in FIGS. 4 to 9.

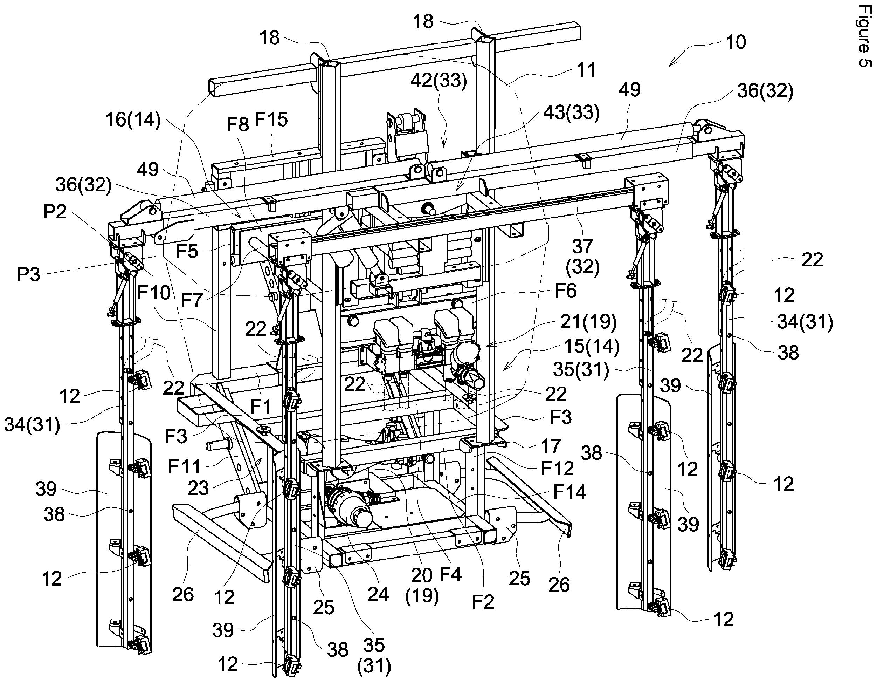

As illustrated in FIGS. 1 and 2, the chemical tank 11 has a rectangular parallelepiped shape with a top opening and includes a lid 13 that covers and closes the top opening. As illustrated in FIGS. 4 and 5, a tank support frame 14 is provided for supporting the chemical tank 11. The tank support frame 14 includes a lower support frame 15, which is disposed under the chemical tank 11 for receiving and supporting the chemical tank 11, and a middle support frame 16, which penetrates, in the front-rear direction, through a middle portion of the chemical tank 11 in the up-down direction. In FIGS. 4 and 5, the chemical tank 11 is indicated by a long and short dash line.

As illustrated in FIGS. 4 and 5, the lower support frame 15 includes a plurality of frame pieces, which specifically is a combination of a first frame piece F1, a second frame piece F2, third frame pieces F3, and a fourth frame piece F4, that are connected together by welding or using connectors, for example, into a rectangular frame shape in plan view. The first frame piece F1 is disposed on a front side of the chemical tank 11 and extends in the left-right direction. The second frame piece F2 is disposed on a rear side of the chemical tank 11 and extends in the left-right direction. The first frame piece F1 has a wider width in the front-rear direction than the second frame piece F2. The third frame pieces F3 are disposed on opposite sides of the chemical tank 11 in the left-right direction and extend in the front-rear direction while connecting ends of the first frame piece F1 to ends of the second frame piece F2. The fourth frame piece F4 is disposed on a central portion of the chemical tank 11 in the front-rear direction and extends in the left-right direction while connecting the third frame pieces F3 to each other.

As illustrated in FIGS. 4 and 5, the middle support frame 16 includes a plurality of frame pieces, which specifically is a combination of a fifth frame piece F5, a sixth frame piece F6, seventh frame pieces F7, an eighth frame piece F8, and a ninth frame piece F9, that are connected together by welding or using connectors, for example. The middle support frame 16 holds the chemical tank 11 from the front and the rear. A pair of left and right tenth frame pieces F10 extend upward from the opposite ends of the first frame piece F1 in the left-right direction. The fifth frame piece F5 is disposed on middle portions of the pair of left and right tenth frame pieces F10, and extends in the left-right direction while spanning across the pair of left and right tenth frame pieces F10. Opposite ends of a side of the second frame piece F2 in the left-right direction have a pair of left and right bases 17 having flat upper surfaces and extending rearward. Lift rails 18 extending upward are stood on the respective left and right bases 17. The sixth frame piece F6 is disposed on middle portions of the pair of left and right lift rails 18, and extends in the left-right direction while spanning across the pair of left and right lift rails 18. The seventh frame pieces F7 are in the shape of a pair of left and right rods extending in the front-rear direction with front ends thereof connected to the fifth frame piece F5 and rear ends thereof connected to the sixth frame piece F6. The eighth frame piece F8 is disposed on front end parts of the pair of left and right seventh frame pieces F7 with the seventh frame pieces F7 penetrating therethrough in the front-rear direction. The eighth frame piece F8 has a plate shape and is in contact with a front surface of the chemical tank 11. The ninth frame piece F9 is disposed on rear end parts of the pair of left and right seventh frame pieces F7 with the seventh frame pieces F7 penetrating therethrough in the front-rear direction. The ninth frame piece F9 has a plate shape and is in contact with a rear surface of the chemical tank 11. As described above, the middle support frame 16 has a supporting configuration in which the pair of left and right seventh frame pieces F7 penetrate through the central portion of the chemical tank 11 in the up-down direction, and the eighth frame piece F8 and the ninth frame piece F9 hold the chemical tank 11 therebetween in the front-rear direction.

As illustrated in FIGS. 4 and 5, the chemical spraying device 10 includes a chemical supply section 19 that supplies the chemical from the chemical tank 11 to the chemical ejecting sections 12. The chemical supply section 19 includes a pump 20 disposed under the chemical tank 11 and a distribution section 21 disposed behind the chemical tank 11.

As illustrated in FIG. 5, the distribution section 21 is supported on a rear surface of the sixth frame piece F6 and distributes the chemical from the pump 20 to each of the chemical ejecting sections 12 distributed into the four locations in the left-right direction. The distribution section 21 is switchable between a supply state, in which the distribution section 21 supplies the chemical to each of the chemical ejecting sections 12 distributed into the four locations in the left-right direction, and a non-supply state, in which the distribution section 21 stops supplying the chemical. The distribution section 21 includes, for example, a pressure regulating valve so as to be able to regulate the pressure of the chemical being supplied to the chemical ejecting sections 12 to a desired level. As illustrated in FIG. 5, the chemical tank 11, the pump 20, the distribution section 21, and the chemical ejecting sections 12 are in communication with one another through, for example, hoses 22 connecting these components. The hoses 22, some of which are omitted, are indicated by dotted lines in FIG. 5, and are omitted in the other drawings.

The following describes an arrangement configuration of the pump 20.

At a lower location in the lower support frame 15 of the tank support frame 14, a hollow space 23 is formed by connecting eleventh to fifteenth frame pieces F11 to F15 by welding or using connectors, for example, as illustrated in FIGS. 4 and 5. The pump 20 is disposed in the hollow space 23. The eleventh frame pieces F11 extend downward from the opposite ends of the first frame piece F1 in the left-right direction. Each of the eleventh frame pieces F11 is inclined such that a lower side thereof is located further rearward than an upper side thereof. The twelfth frame pieces F12 extend downward from the opposite ends of the second frame piece F2 in the left-right direction. The thirteenth frame pieces F13 extend downward from middle portions of the respective third frame pieces F3. The fourteenth frame pieces F14 extend in the front-rear direction while connecting lower ends of the eleventh frame pieces F11, lower ends of the thirteenth frame pieces F13, and lower ends of the twelfth frame pieces F12. At a rear location in the hollow space 23, a chemical drawing section 24 is provided, which allows the chemical to be drawn out of the chemical tank 11.

The following describes a connection configuration of the chemical spraying device 10 to the three-point link mechanism including the pair of left and right lower links 5 and the upper link 6.

As illustrated in FIG. 4, the fifteenth frame piece F15 extends in the left-right direction while connecting upper ends of the pair of left and right tenth frame pieces F10 together. A pair of left and right first link connection sections R1 are provided to connect a central part of the first frame piece F1 in the left-right direction to a central part of the fifteenth frame piece F15 in the left-right direction. The upper link 6 is pivotally connected to the first link connection sections R1. The first link connection sections R1 each have a plurality of connection holes R1a arranged at intervals in the up-down direction, so that the height at which the upper link 6 is connected to the first link connection sections R1 is adjustable. Middle portions of the eleventh frame pieces F11 each have a plurality of round holes F11a. Pin-shaped second link connection sections R2 are inserted into any of the plurality of round holes F11a. Thus, the second link connection sections R2 are connected to the lower links 5 as illustrated in FIG. 1.

As illustrated in FIGS. 1 and 4, a positioning member 7 is provided to fix an installation position of the chemical spraying device 10 in the up-down direction. A front end of the positioning member 7 is pivotally connected to the upper link 6, and a rear end thereof is pivotally connected to lower end parts of the first link connection sections R1. Thus, the positioning member 7 fixes the installation position of the chemical spraying device 10 in the up-down direction. The upper link 6 has a plurality of connection holes 6a, so that a location at which the positioning member 7 is pivotally connected to the upper link 6 is adjustable. Lower parts of the first link connection sections R1 each have a plurality of connection holes R1b, so that locations at which the positioning member 7 is pivotally connected to the first link connection sections R1 are adjustable.

As illustrated in FIGS. 4 and 5, outer sides of the pair of left and right fourteenth frame pieces F14 in the left-right direction are each provided with a stand section 26 with stand support sections 25 therebetween. The stand support sections 25 allow each of the stand sections 26 to be swingable about an axis in line with the front-rear direction. Each of the stand sections 26 is swingable between a non-use position, in which the stand section 26 extends outward in the left-right direction, and a use position (not shown), in which the stand section 26 extends downward in the up-down direction, by swinging about the axis in line with the front-rear direction through the stand support sections 25. This causes the stand sections 26 to swing into the use positions when the chemical spraying device 10 is detached from the tractor 1. Thus, the stand sections 26 in the use positions can support the chemical spraying device 10 while allowing the chemical spraying device 10 to stand by itself on a contact surface of the ground or the like.

In order to support the chemical ejecting sections 12, as illustrated in FIGS. 4 and 5, the chemical spraying device 10 includes first ejection support sections 31 having the chemical ejecting sections 12 and extending in the up-down direction in a vertical posture, a second ejection support section 32 extending in a lateral direction from the chemical tank 11 and supporting the first ejection support sections 31, and a connecting support section 33 being connectable to the chemical tank 11 and supporting the second ejection support section 32.

As illustrated in FIG. 5, the first ejection support sections 31 are longer than the chemical tank 11 in the up-down direction, and each include an outer first ejection support section 34 located outward and an inner first ejection support section 35 located inward in the left-right direction. The outer first ejection support section 34 is located further frontward than the inner first ejection support section 35. Thus, the outer first ejection support section 34 and the inner first ejection support section 35 are spaced apart both in the left-right direction and in the front-rear direction. The outer first ejection support section 34 and the inner first ejection support section 35 on the left side receive attachment of the chemical ejecting sections 12 located further leftward than the chemical tank 11. The outer first ejection support section 34 and the inner first ejection support section 35 on the right side receive attachment of the chemical ejecting sections 12 located further rightward than the chemical tank 11. That is, the first ejection support sections 31 include the pair of left and right outer first ejection support sections 34 and the pair of left and right inner first ejection support sections 35.

The second ejection support section 32 includes outer second ejection support sections 36 supporting the outer first ejection support sections 34 and an inner second ejection support section 37 supporting the inner first ejection support sections 35. Like the outer first ejection support sections 34, the outer second ejection support section 36 on the left side and the outer second ejection support section 36 on the right side form a pair. The inner second ejection support section 37 supports the pair of left and right inner first ejection support sections 35 on its own.

The chemical ejecting sections 12, the outer first ejection support section 34, and the inner first ejection support section 35 on the left side have the same configuration as their respective counterparts on the right side. Accordingly, each pair of left and right ones are described collectively by, for example, being denoted by the same reference numeral.

The following describes the first ejection support sections 31.

As illustrated in FIG. 5, each of the chemical ejecting sections 12 includes a spray nozzle enabled to aerosolize and eject the chemical. Each of the vertically postured first ejection support sections 31 (the outer first ejection support section 34 and the inner first ejection support section 35) has a plurality of chemical ejecting sections 12 arranged at intervals in the up-down direction. The first ejection support section 31 has a hollow cylindrical shape having an internal distribution channel for distributing the chemical. The first ejection support section 31 has a configuration that enables the chemical supplied thereto through the hose 22 in communication with an upper part thereof to be supplied to each of the plurality of chemical ejecting sections 12 thereon through the internal distribution channel. The chemical ejecting sections 12 attached to the outer first ejection support section 34 of the first ejection support section 31 are oriented so as to eject the chemical inward from the outer first ejection support section 34. The chemical ejecting sections 12 attached to the inner first ejection support section 35 of the first ejection support section 31 are oriented so as to eject the chemical outward from the inner first ejection support section 35.

As illustrated in FIG. 5, the first ejection support section 31 (the outer first ejection support section 34 and the inner first ejection support section 35) has a plurality of attachment sections 38 arranged at equal intervals in the up-down direction. A chemical ejecting section 12 is attachable to each of the plurality of attachment sections 38. As a result, the number and positions of the chemical ejecting sections 12 to be attached can be changed by changing attachment conditions such as whether or not to or which position to attach the chemical ejecting sections 12 with respect to the plurality of attachment sections 38.

As illustrated in FIGS. 4 and 5, a front side of the first ejection support section 31 (the outer first ejection support section 34 and the inner first ejection support section 35) has covers 39 covering the first ejection support section 31. The covers 39 cover a range from a location above a center of the first ejection support section 31 to a lower end thereof in the up-down direction. The cover 39 attached to the outer first ejection support section 34 of the first ejection support section 31 is curved such that an inner side thereof is located further rearward than an outer side thereof, covering a front side and an inner side of the outer first ejection support section 34. The cover 39 attached to the inner first ejection support section 35 of the first ejection support section 31 is curved such that an outer side thereof is located further rearward than an inner side thereof, covering a front side and an outer side of the inner first ejection support section 35.

The following describes the second ejection support section 32.

The outer second ejection support sections 36 and the inner second ejection support section 37 of the second ejection support section 32 have different configurations. Accordingly, the outer second ejection support sections 36 and the inner second ejection support section 37 will be described separately.

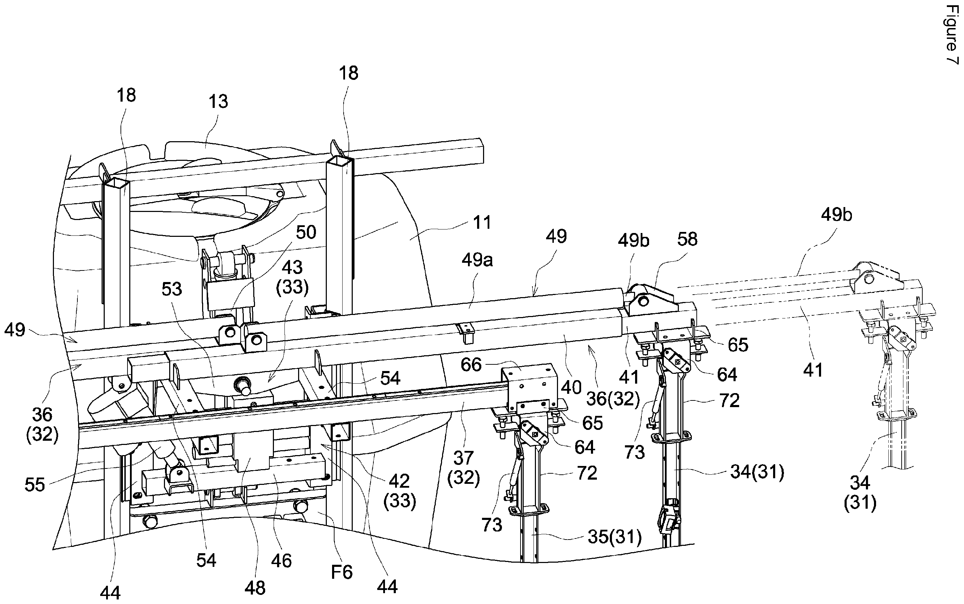

As illustrated in FIG. 5, the pair of left and right outer second ejection support sections 36 respectively support the left outer first ejection support section 34 and the right outer first ejection support section 34. The outer second ejection support sections 36 extend outward from a center of the chemical tank 11 in the left-right direction. As illustrated in FIG. 7, the outer second ejection support sections 36 each include a rectangular cylindrical first extending portion 40 and a rectangular cylindrical second extending portion 41 fitted within the first extending portion 40. FIG. 7 shows the right outer second ejection support section 36.

As illustrated in FIG. 7, the second extending portion 41 is extendable from and retractable into the first extending portion 40 in the left-right direction through extension and contraction operations of an electric retraction cylinder 49 causing the second extending portion 41 to move in the left-right direction inside the first extending portion 40. The retraction cylinder 49 includes a cylinder body 49a extending outward in the left-right direction and a rod 49b extendable from and retractable into the cylinder body 49a. A distal end of the rod 49b is connected to the second extending portion 41 via a cylinder attachment section 58. The longitudinal outer first ejection support section 34 extending downward is supported on an outer end of the second extending portion 41 in the left-right direction.

As indicated by dotted lines in FIG. 7, the extension operation of the retraction cylinder 49 causes the second extending portion 41 to protrude outward in the left-right direction out of the first extending portion 40. Thus, the outer first ejection support section 34 can move outward in the left-right direction. In an opposite manner, the contraction operation of the retraction cylinder 49 causes the second extending portion 41 to be retracted inward in the left-right direction into the first extending portion 40. Thus, the outer first ejection support section 34 can move inward in the left-right direction. As described above, the position of the outer first ejection support section 34 and the positions of the chemical ejecting sections 12 on the outer first ejection support section 34 in the left-right direction are adjustable through the extension and contraction operations of the retraction cylinder 49.

As illustrated in FIG. 5, unlike the outer second ejection support sections 36, the single inner second ejection support section 37 supports both the left inner first ejection support section 35 and the right inner first ejection support section 35. The inner second ejection support section 37 has a rectangular cylindrical shape extending both leftward and rightward from the center of the chemical tank 11 in the left-right direction. A left end of the inner second ejection support section 37 has the left inner first ejection support section 35 extending downward in a vertical posture. A right end of the inner second ejection support section 37 has the left inner first ejection support section 35 extending downward in a vertical posture. As described above, the two left and right inner first ejection support sections 35 are supported by the single inner second ejection support section 37.

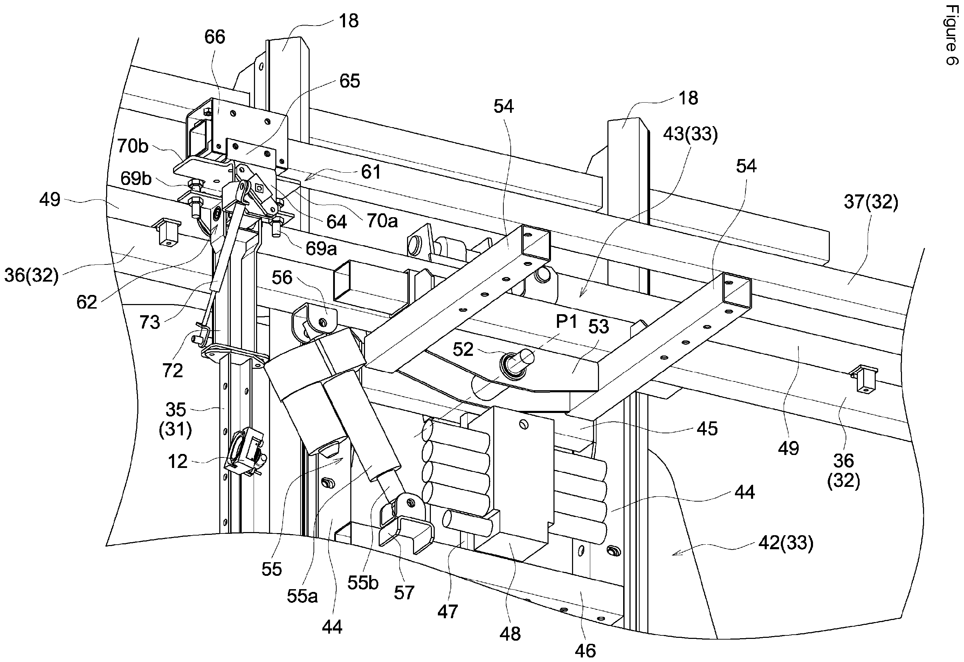

As illustrated in FIGS. 4 and 5, the connecting support section 33 includes a lifting support section 42 supported in a liftable manner relative to the chemical tank 11 and a seesaw swing support section 43 supporting the second ejection support section 32 in a manner that enables seesaw swing of the second ejection support section 32 relative to the lifting support section 42 about a first axis P1 (see FIG. 6) in line with the front-rear direction.

As illustrated in FIG. 4, the lifting support section 42 is liftable along the pair of left and right lift rails 18 stood behind the chemical tank 11. The lifting support section 42 includes: a pair of left and right liftable sections 44 enabled to move upward and downward along the lift rails 18 while in engagement with the respective left and right lift rails 18; a first lifting member 45 extending in the left-right direction while connecting upper parts of the pair of left and right liftable sections 44; a second lifting member 46 extending in the left-right direction while connecting lower parts of the pair of left and right liftable sections 44; a third lifting member 47 extending in the up-down direction while connecting central portions of the first lifting member 45 and the second lifting member 46 in the left-right direction; and a valve unit 48 (see FIG. 6) disposed on a rear surface of the third lifting member 47 for causing operation of a lifting cylinder 50.

As illustrated in FIG. 4, the lifting cylinder 50, which is a hydraulic cylinder, is provided for driving the lifting support section 42 to move upward or downward. The lifting cylinder 50 includes a cylinder body 50a extending in the up-down direction in a vertical posture and a rod 50b extendable from and retractable at a lower end of the cylinder body 50a. An upper end of the cylinder body 50a is connected to the first lifting member 45, which is a movable side, via a cylinder attachment section 51, and a distal end of the rod 50b is connected to the sixth frame piece F6, which is a fixed side, via a cylinder attachment section 59. Through the lifting cylinder 50 extending and contracting, the pair of left and right liftable sections 44 move upward and downward along the pair of left and right lift rails 18. Thus, the lifting support section 42 is driven to move upward and downward.

As illustrated in FIG. 6, the seesaw swing support section 43 includes: a first seesaw swing member 53 enabled to swing, relative to the first lifting member 45 of the lifting support section 42, in a seesaw manner about the first axis P1 through a front-rear shaft 52; and a pair of left and right second seesaw swing members 54 extending rearward from opposite ends of the first seesaw swing member 53 in the left-right direction. The second seesaw swing members 54 are fixedly connected to the first seesaw swing member 53 by welding or the like. The left outer second ejection support section 36 and the right outer second ejection support section 36 arranged side-by-side in the front-rear direction are fixedly connected to tops of the first seesaw swing member 53 and the second seesaw swing members 54 by welding or the like. As illustrated in FIG. 7, the inner second ejection support section 37 is fixedly connected to rear ends of the pair of left and right second seesaw swing members 54 by welding or the like. As illustrated in FIG. 6, through the first seesaw swing member 53 and the second seesaw swing members 54 swinging as a unit in a seesaw manner about the first axis P1, the left outer second ejection support section 36, the right outer second ejection support section 36, and the inner second ejection support section 37 swing in a seesaw manner about the first axis P1. As described above, the seesaw swing support section 43 supports the left outer second ejection support section 36, the right outer second ejection support section 36, and the inner second ejection support section 37 in a manner that enables seesaw swing of these second ejection support sections as a unit about the first axis P1.

As illustrated in FIG. 6, an electric seesaw swing cylinder 55 is provided for driving the seesaw swing support section 43 to swing in a seesaw manner. The seesaw swing cylinder 55 includes an inclined cylinder body 55a at an angle to the up-down direction and a rod 55b extendable from and retractable at a lower end of the cylinder body 55a. An upper end of the cylinder body 55a is pivotally connected to a lower surface of the left outer second ejection support section 36 via a cylinder attachment section 56. A distal end of the rod 55b is pivotally connected to a rear surface of the second lifting member 46 via a cylinder attachment section 57. Through the seesaw swing cylinder 55 extending and contracting, the first seesaw swing member 53 and the second seesaw swing members 54 are driven to swing as a unit in a seesaw manner about the first axis P1. Thus, the left outer second ejection support section 36, the right outer second ejection support section 36, and the inner second ejection support section 37 are driven to swing as a unit in a seesaw manner about the first axis P1.

The following describes a supporting configuration for the second ejection support section 32 to support the first ejection support sections 31.

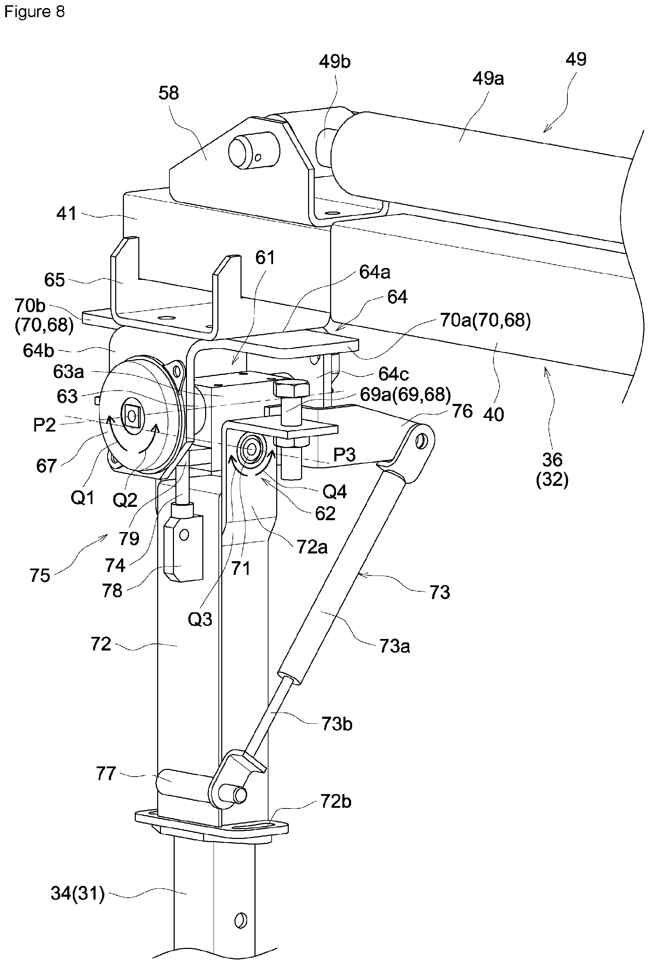

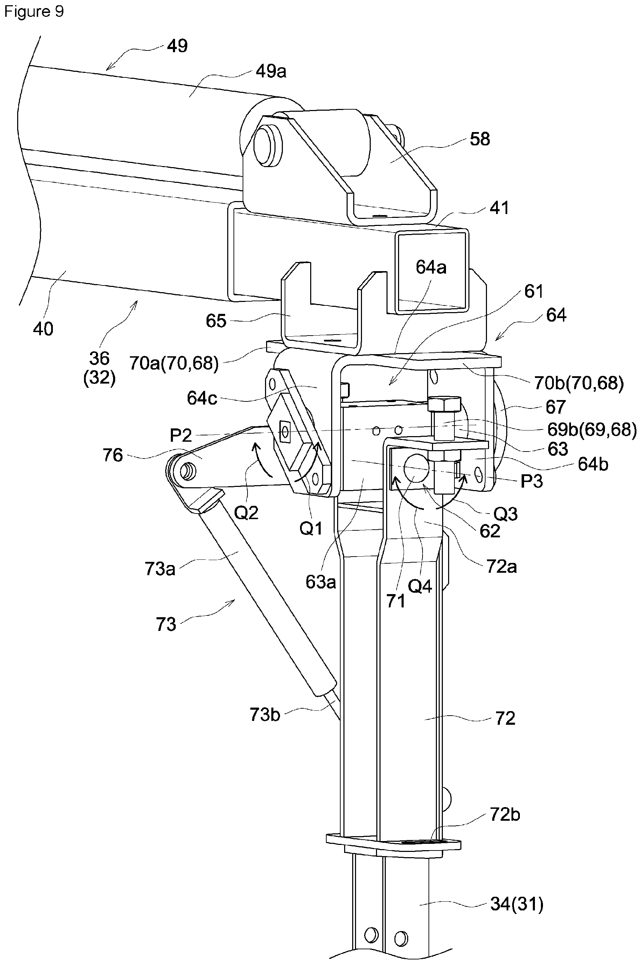

As illustrated in FIG. 5, a left outer end of the left outer second ejection support section 36 in the left-right direction supports the left outer first ejection support section 34 in a manner that enables the left outer first ejection support section 34 to swing about an axis in line with the front-rear direction (see P2 in FIGS. 4 and 5). Aright outer end of the right outer second ejection support section 36 in the left-right direction supports the right outer first ejection support section 34 in a manner that enables the right outer first ejection support section 34 to swing about an axis in line with the front-rear direction. The left end of the inner second ejection support section 37 in the left-right direction supports the left inner first ejection support section 35 in a manner that enables the left inner first ejection support section 35 to swing about an axis in line with the front-rear direction. The right end of the inner second ejection support section 37 in the left-right direction supports the right inner first ejection support section 35 in a manner that enables the right inner first ejection support section 35 to swing about an axis in line with the front-rear direction. As illustrated in FIGS. 8 and 9, left-right swing support sections 61 are provided for supporting the respective first ejection support sections 31 in a manner that enables the first ejection support sections 31 to swing relative to the second ejection support section 32 about the axes in line with the front-rear direction as described above.

The first ejection support sections 31 are swingable relative to the second ejection support section 32 about the axes in line with the front-rear direction. Not only that, the first ejection support sections 31 are swingable relative to the second ejection support section 32 about axes in line with the left-right direction (see P3 in FIGS. 4 and 5). To this end, as illustrated in FIGS. 8 and 9, front-rear swing support sections 62 are provided for supporting the respective first ejection support sections 31 in a manner that enables the first ejection support sections 31 to swing relative to the left-right swing support sections 61 about the axes in line with the left-right direction.

The following describes configurations of the left-right swing support sections 61 and the front-rear swing support sections 62. However, a configuration for the left outer second ejection support section 36 to support the left outer first ejection support section 34, a configuration for the right outer second ejection support section 36 to support the right outer first ejection support section 34, and a configuration for the inner second ejection support section 37 to support the left inner first ejection support section 35 and the right inner first ejection support section 35 are the same. Accordingly, only the configuration for the right outer second ejection support section 36 to support the right outer first ejection support section 34 will be described on the basis of FIGS. 8 and 9, and description of the other configurations will be omitted.

First, the left-right swing support sections 61 will be described.

As illustrated in FIGS. 8 and 9, each of the left-right swing support sections 61 includes a shaft-like rotation member 63 extending in the front-rear direction and a rotation support section 64 that supports the rotation member 63 in a rotatable manner about the second axis P2 in line with the front-rear direction. A middle portion of the rotation member 63 in the front-rear direction has a bulge part 63a having an outer circumference bulging leftward and rightward in the left-right direction and downward in the up-down direction, and thus having a rectangular cross-sectional shape. The rotation support section 64 is fixedly connected to a lower side of the second ejection support section 32 via a connecting plate 65. Note that, as illustrated in FIG. 6, the configuration for the inner second ejection support section 37 to support the inner first ejection support sections 35 includes surrounding members 66 respectively surrounding the opposite ends of the inner second ejection support section 37 in the left-right direction. Each of the rotation support sections 64 is fixedly connected to the lower side of the second ejection support section 32 via the corresponding surrounding member 66 as well as via the connecting plate 65. Returning to FIGS. 8 and 9, each of the rotation support sections 64 has a bent plate shape having a flat upper face 64a extending in the front-rear direction, a front face 64b extending downward from a front end of the upper face 64a, and a rear face 64c extending downward from a rear end of the upper face 64a. The upper face 64a of the rotation support section 64 is fixedly connected to the connecting plate 65 by welding or the like. The rotation member 63 is supported in a rotatable manner about the second axis P2 while spanning across the front face 64b and the rear face 64c of the rotation support section 64.

Thus, each of the left-right swing support sections 61 causes the corresponding first ejection support section 31 to swing relative to the second ejection support section 32 about the second axis P2 through the rotation member 63 rotating about the second axis P2. The left-right swing support sections 61 on the second ejection support section 32 only support the first ejection support sections 31 in a manner that enables the first ejection support sections 31 to swing about the second axis P2 and do not include a swing driver for causing swing of the first ejection support sections 31. Each of the first ejection support sections 31 swings under its own weight relative to the second ejection support section 32 about the second axis P2 into a hanging position in which the first ejection support section 31 extends downward from the second ejection support section 32.

As illustrated in FIG. 8, the rotation member 63 includes a rotary damper 67 on a front side of the front face 64b in the rotation support section 64. The rotary damper 67 reduces the speed of the rotation of the rotation member 63 by applying a braking force when the rotation member 63 rotates about the second axis P2. The rotary damper 67 serves as a swing resistance section that provides swing resistance when the first ejection support section 31 swings relative to the second ejection support section 32. As a result of being provided in the rotation member 63 that rotates about the second axis P2, the rotary damper 67 is able to directly reduce the speed of the rotation of the rotation member 63 and effectively provide swing resistance when the first ejection support section 31 swings.

As illustrated in FIGS. 8 and 9, swing range restriction sections 68 are provided for restricting ranges of swing of the respective first ejection support sections 31 relative to the second ejection support section 32. Note that, the swing range restriction sections 68 are shown in FIGS. 6 to 9, but are omitted in FIGS. 1 to 5. Each of the swing range restriction sections 68 includes a contact portion 69 located toward the corresponding first ejection support section 31 and a mating contact portion 70 located toward the second ejection support section 32. The range of swing of the first ejection support section 31 is restricted through the contact portion 69 coming in contact with the mating contact portion 70 when the first ejection support section 31 swings relative to the second ejection support section 32.

The contact portion 69 includes a bolt provided in a front-rear swing member 72 fixedly connected to the first ejection support section 31. The mating contact portion 70 includes a flat plate-shaped extension, which extends in the left-right direction, of the upper face 64a of the rotation support section 64 fixedly connected to the second ejection support section 32 via the connecting plate 65. As illustrated in FIG. 8, the contact portion 69 and the mating contact portion 70 include an inner contact portion 69a and an inner mating contact portion 70a that restrict the range of inward swing (in a direction represented by Q2 in FIGS. 8 and 9) in the left-right direction about the second axis P2. As illustrated in FIG. 9, the contact portion 69 and the mating contact portion 70 also include an outer contact portion 69b and an outer mating contact portion 70b that restrict the range of outward swing (in a direction represented by Q1 in FIGS. 8 and 9) in the left-right direction about the second axis P2. The first ejection support section 31 is, under its own weight, in a hanging position in which the first ejection support section 31 extends downward from the second ejection support section 32. The swing range restriction section 68 therefore restricts the range of swing of the first ejection support section 31 to a range that is symmetrical in the left-right direction with respect to the hanging position of the first ejection support section 31.

Next, the front-rear swing support sections 62 will be described.

As illustrated in FIGS. 8 and 9, each of the front-rear swing support sections 62 includes a left-right shaft 71 extending in the left-right direction and the swing member 72 swingable relative to the left-right shaft 71 about the third axis P3 in line with the left-right direction. The left-right shaft 71 is provided on the rotation member 63 of the left-right swing support section 61, and is rotatable about the second axis P2 as a unit with the rotation member 63. The front-rear swing member 72 has an upper part 72a bifurcated in the left-right direction and is swingable about the third axis P3 with the upper part 72a pivotally connected to the left-right shaft 71.

A lower end of the front-rear swing member 72 is fixedly connected to an upper end of the first ejection support section 31 using a connector or the like. As illustrated in FIG. 8, the lower end of the front-rear swing member 72 has elongate holes 72b. The angle of attachment of the first ejection support section 31 relative to the front-rear swing member 72 is adjustable by adjusting positions of round holes in the upper end of the first ejection support section 31 relative to the elongate holes 72b in the front-rear swing member 72 when the front-rear swing member 72 is fixedly connected to the first ejection support section 31 using a connector or the like.

Biasing sections 73 are provided for exerting a biasing force on the respective first ejection support sections 31 to cause the first ejection support sections 31 to swing frontward (in a direction represented by Q3 in FIGS. 8 and 9) in the front-rear direction when the first ejection support sections 31 swing about the third axis P3. Swing position restriction sections 75 are provided for restricting swing positions of the respective first ejection support sections 31 to use positions by restricting frontward swing (in the direction represented by Q3 in FIGS. 8 and 9) of the first ejection support sections 31 through contact of contact portions 74 with the first ejection support sections 31.

Each of the biasing sections 73 includes a cylinder body 73a that is inclined such that a rear side thereof is located further upward than a front side thereof, and a rod 73b extendable from and retractable at a lower end of the cylinder body 73a. An elastic body or the like is provided within the cylinder body 73a of the biasing section 73 and exerts a biasing force in a direction for the rod 73b to extend from the cylinder body 73a. A rear end of the cylinder body 73a is pivotally connected to a rear attachment section 76 extending rearward from the bulge part 63a of the rotation member 63. A distal end of the rod 73b is pivotally connected to a rod-shaped front attachment section 77 extending inward in the left-right direction from the front-rear swing member 72.

Each of the swing position restriction sections 75 restricts the swing position of the corresponding first ejection support section 31 to a use position by restricting frontward swing of the first ejection support section 31 through contact between the contact portion 74 and a mating contact portion 78. The contact portion 74 includes a bolt extending downward and attached to an attachment section 79 extending frontward from the bulge part 63a of the rotation member 63. The mating contact portion 78 includes a protrusion extending in the up-down direction and provided on a front surface of the front-rear swing member 72. The use position of the first ejection support section 31 is set to the hanging position in which the first ejection support section 31 extends downward at a right angle to the second ejection support section 32.

Since the biasing section 73 exerts a biasing force on the first ejection support section 31 to cause the first ejection support section 31 to swing frontward (in the direction represented by Q3 in FIGS. 8 and 9) in the front-rear direction, the first ejection support section 31 swings frontward (in the direction represented by Q3 in FIGS. 8 and 9) about the third axis P3. When the first ejection support section 31 swings into the use position in which the first ejection support section 31 extends downward from the second ejection support section 32, the swing position restriction section 75 restricts the first ejection support section 31 to the use position by restricting frontward swing (in the direction represented by Q3 in FIGS. 8 and 9) of the first ejection support section 31 through the contact between the contact portion 74 and the mating contact portion 78.

The biasing section 73 allows the first ejection support section 31 to swing rearward (in a direction represented by Q4 in FIGS. 8 and 9) against the biasing force being exerted on the first ejection support section 31. The swing position restriction section 75 also allows the first ejection support section 31 to swing rearward (in the direction represented by Q4 in FIGS. 8 and 9) without the contact portion 74 coming in contact with the mating contact portion 78 on the first ejection support section 31. This enables the first ejection support section 31 to swing rearward (in the direction represented by Q4 in FIGS. 8 and 9) against the biasing force of the biasing section 73. When something extraneous, such as a chemical spray target portion of a crop or another foreign object, hits the first ejection support section 31 or the like while the tractor 1 is running, for example, the extraneous thing pushes the first ejection support section 31 rearward to cause the first ejection support section 31 to swing from the use position into an upper rear retracted position. Thus, damage to the first ejection support sections 31 due to the contact with anything extraneous can be prevented or reduced.

The following describes operation of the chemical spraying device 10. The chemical spraying device 10 includes a controller, not shown, that controls actuation of the chemical spraying device 10 according to an operation received through a human-operated operation section provided in the tractor 1 or the like. The controller controls actuation of the chemical spraying device 10 by controlling actuation states of the pump 20 and the distribution section 21, and actuation states and the like of various cylinders including the pair of left and right retraction cylinders 49, the lifting cylinder 50, and the seesaw swing cylinder 55.

The controller controls determination as to which of the chemical ejecting sections 12 distributed into the four locations in the left-right direction are to eject the chemical by controlling the actuation states of the pump 20 and the distribution section 21 according to an operation received through the operation section. The controller controls the positions of the outer first ejection support sections 34 and the chemical ejecting sections 12 on the outer first ejection support sections 34 in the left-right direction by controlling the actuation state of the retraction cylinders 49 according to an operation received through the operation section. The controller collectively controls the heights of the chemical ejecting sections 12 distributed into the four locations in the left-right direction by controlling the actuation state of the lifting cylinder 50 according to an operation received through the operation section. The controller collectively controls the inclinations of the outer second ejection support sections 36 and the inner second ejection support section 37 in the left-right direction by controlling the actuation state of the seesaw swing cylinder 55.

The positions of the outer first ejection support sections 34 and the chemical ejecting sections 12 on the outer first ejection support sections 34 in the left-right direction can be adjusted to any of a plurality of positions in the left-right direction by adjusting the degree of extension or contraction of the retraction cylinders 49. To this end, a plurality of positions are preset in the left-right direction. Each of the preset positions is associated with a degree of extension or contraction of the retraction cylinders 49 and with positions of the first ejection support sections 31, and then stored in a storage section such as non-volatile memory. The degree of extension or contraction of the retraction cylinders 49 can be acquired from, for example, a sensor or the like that detects the actuation state and the like of the retraction cylinders 49. The positions of the first ejection support sections 31 can be acquired from, for example, a sensor or the like that detects an amount of extension or contraction of the second extending portions 41 in the second ejection support section 32.

Thus, upon specifying one of the plurality of preset positions stored in the storage section, the controller can control the actuation state of the retraction cylinders 49 so as to obtain the degree of extension or contraction of the retraction cylinders 49 and the positions of the first ejection support sections 31 associated with the specified preset position. The controller can specify one of the plurality of present positions according to a selection operation performed by a user through the operation section or the like. The controller can also automatically specify a preset position according to various conditions. In the case of the automatic specification, for example, a preset position corresponding to previous positions the first ejection support sections 31 have been actually in may be stored in the storage section, and the preset position corresponding to the previous positions stored in the storage section may be specified.

Like the adjustment of the positions of the outer first ejection support sections 34 and the chemical ejecting sections 12 on the outer first ejection support sections 34 in the left-right direction, the heights of the chemical ejecting sections 12 can be adjusted according to one specified preset height by presetting a plurality of heights and specifying one of the plurality of preset heights.

While the chemical is being sprayed onto the crop C, the controller adjusts, according to an operation received through the operation section, the positions of the outer first ejection support sections 34 and the chemical ejecting sections 12 on the outer first ejection support sections 34 in the left-right direction such that each of the outer first ejection support sections 34 and the corresponding one of the inner first ejection support sections 35 have a predetermined space therebetween in the left-right direction as illustrated in FIG. 2. This allows the tractor 1 to run while having chemical spray target portions of the crop C between each outer first ejection support section 34 and the corresponding inner first ejection support section 35. The chemical is sprayed onto the crop C through the controller causing the chemical ejecting sections 12 to start spraying the chemical according to an operation received through the operation section. During the chemical spray, the chemical ejecting sections 12 on the outer first ejection support sections 34 eject the chemical inward in the left-right direction, and the chemical ejecting sections 12 on the inner first ejection support sections 35 eject the chemical outward in the left-right direction.

In a situation in which a contact surface G1 of the work area is flat as illustrated in FIG. 2, the controller can adjust, according to an operation received through the operation section, the inclinations of the outer second ejection support sections 36 and the inner second ejection support section 37 in the left-right direction such that the inclinations are parallel or substantially parallel to the flat contact surface G1. Each first ejection support section 31 swings under its own weight relative to the second ejection support section 32 about the axis (second axis P2 in FIGS. 8 and 9) in line with the front-rear direction into a hanging position in which the first ejection support section 31 extends downward from the second ejection support section 32. This allows the plurality of first ejection support sections 31 to be parallel or substantially parallel to the erect crop C, so that the chemical can be suitably sprayed through the chemical ejecting sections 12 on each of the plurality of first ejection support sections 31.

Note here that the controller can adjust the inclinations of the outer second ejection support sections 36 and the inner second ejection support section 37 in the left-right direction not only by the adjustment according to an operation received through the operation section but also by automatic control in which the inclinations of the outer second ejection support sections 36 and the inner second ejection support section 37 in the left-right direction are adjusted to desired inclinations (for example, inclinations parallel or substantially parallel to the contact surface of the work area) on the basis of information detected by a sensor, for example. For example, a sensor may be provided for detecting distances from opposite ends of the outer second ejection support sections 36 in the left-right direction to the contact surface. The controller can acquire a slope angle of the contact surface on the basis of the information detected by the sensor and determine desired inclinations according to the slope angle of the contact surface. The controller can then perform the automatic control such that the inclinations of the outer second ejection support sections 36 and the inner second ejection support section 37 in the left-right direction are the desired inclinations.

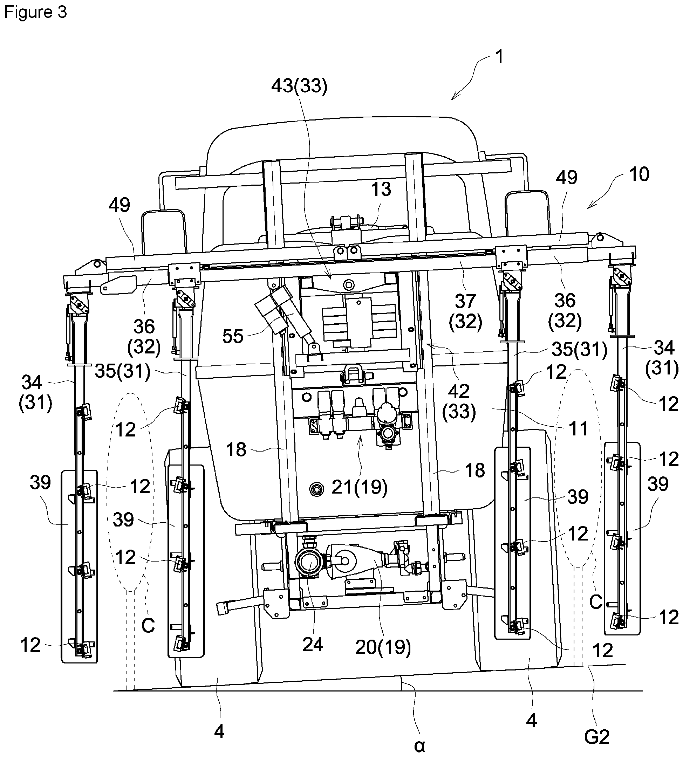

As illustrated in FIG. 3, a contact surface G2 of the work area can be slope at a specific angle (α in FIG. 3) to a horizontal direction. Even in such a case, the controller can adjust the inclinations of the outer second ejection support sections 36 and the inner second ejection support section 37 in the left-right direction such that the inclinations are parallel or substantially parallel to the slope contact surface G2 either by the adjustment according to an operation received through the operation section or by the automatic control. Each first ejection support section 31 swings under its own weight relative to the second ejection support section 32 about the axis (second axis P2 in FIGS. 8 and 9) in line with the front-rear direction into a hanging position in which the first ejection support section 31 extends downward from the second ejection support section 32. This allows the plurality of first ejection support sections 31 to be parallel or substantially parallel to the erect crop C, so that the chemical can be suitably sprayed through the chemical ejecting sections 12 on each of the plurality of first ejection support sections 31.

Thus, the inclinations of the outer second ejection support sections 36 and the inner second ejection support section 37 in the left-right direction can be adjusted depending on the contact surface G2 of the work area even in a situation in which the work area is a slope work area or a rough road. Furthermore, each of the plurality of outer first ejection support sections 34 and the plurality of inner first ejection support sections 35 swings under its own weight relative to a corresponding one of the inclination-adjusted outer second ejection support sections 36 and the inclination-adjusted inner second ejection support section 37 about the axis in line with the front-rear direction (second axis P2 in FIGS. 8 and 9) into a hanging position in which the first ejection support section extends downward from the second ejection support section 32. As a result, each of the plurality of first ejection support sections 31 can be positioned parallel or substantially parallel to the erect crop C. This allows the chemical spraying device to suitably spray the chemical onto the crop C while preventing or reducing contact thereof with chemical spray target portions of the crop C.

Furthermore, as described above, each of the first ejection support sections 31 is allowed to swing rearward relative to the second ejection support section 32 about the axis in line with the left-right direction (third axis P3 in FIGS. 8 and 9). Even when something extraneous, such as a chemical spray target portion of the crop C or another foreign object, hits the first ejection support section 31 or the like, for example, the extraneous thing pushes the first ejection support section 31 rearward to cause the first ejection support section 31 to swing from the use position into an upper rear retracted position. Thus, damage to the first ejection support sections 31 can be prevented or reduced.

### [Other Embodiments]

The following describes other embodiments of the present invention. Note that each of the configurations of the embodiments described below is not limited to being adopted independently, but can be adopted in combination with a configuration of another embodiment.

(1) The description of the embodiment given above uses an example that includes the outer first ejection support section 34 and the inner first ejection support section 35 as each of the first ejection support sections 31, and that includes the outer second ejection support sections 36 and the inner second ejection support section 37 as the second ejection support section 32. An alternative embodiment may include, for example, only the inner first ejection support sections 35 and the inner second ejection support section 37. That is, the number and positions of first ejection support sections 31, and the number and positions of second ejection support sections 32 may be changed as appropriate.

(2) The description of the embodiment given above uses an example in which each of the plurality of first ejection support sections 31 is swingable under its own weight relative to the second ejection support section 32 into a hanging position in which the first ejection support section 31 extends downward from the second ejection support section 32. An alternative embodiment may include, for example, a swing driver that drives each of the plurality of first ejection support sections 31 to swing into a hanging position in which the first ejection support section 31 extends downward from the second ejection support section 32.

(3) The description of the embodiment given above uses an example in which each of the rotation support sections 64 includes the rotary damper 67 to provide swing resistance when the corresponding first ejection support section 31 swings relative to the second ejection support section 32. An alternative embodiment may include, for example, an elastic body or the like interposed between the first ejection support section 31 and the second ejection support section 32 to provide swing resistance when the first ejection support section 31 swings relative to the second ejection support section 32. That is, the configuration of such a swing resistance providing section may be changed as appropriate.

(4) The description of the embodiment given above uses an example in which the contact portion 69 in each of the swing range restriction sections 68 is a bolt provided in the corresponding front-rear swing member 72. An alternative embodiment may include, for example, an elastic body or the like in the front-rear swing member 72 to form the contact portion 69. That is, the configuration of the contact portion 69 may be changed as appropriate.

### INDUSTRIAL APPLICABILITY

The present invention is applicable to various chemical spraying devices mountable on work vehicles.

### DESCRIPTION OF REFERENCE NUMERALS

1 Tractor (work vehicle)
10 Chemical spraying device
11 Chemical tank
12 Chemical ejecting section
31 First ejection support section
32 Second ejection support section
43 Seesaw swing support section
61 Left-right swing support section
62 Front-rear swing support section
67 Rotary damper (swing resistance section)
68 Swing range restriction section
73 Biasing section
74 Contact portion
75 Swing position restriction section
P2 Second axis (axis in line with front-rear direction)
P3 Third axis (axis in line with left-right direction)

## Claims

1. A chemical spraying device mountable on a work vehicle, the chemical spraying device comprising:
a chemical tank;
chemical ejecting sections that eject a chemical supplied from the chemical tank;
a plurality of first ejection support sections having the chemical ejecting sections and extending in an up-down direction in a vertical posture; and
a second ejection support section extending in a left-right direction from the chemical tank and supporting the plurality of first ejection support sections, wherein
each of the plurality of first ejection support sections being swingable relative to the second ejection support section about an axis in line with a front-rear direction.

2. The chemical spraying device according to claim 1, wherein each of the plurality of first ejection support sections is swingable under its own weight relative to the second ejection support section, in a hanging position extending downward from the second ejection support section.

3. The chemical spraying device according to claim 1 or 2, comprising a swing resistance section that provides swing resistance when the respective first ejection support sections swing relative to the second ejection support section.

4. The chemical spraying device according to any one of claims 1 to 3, comprising a swing range restriction section that restricts ranges of swing of the respective first ejection support sections relative to the second ejection support section.

5. The chemical spraying device according to any one of claims 1 to 4, wherein the second ejection support section extends both leftward and rightward in the left-right direction from the chemical tank, and supports the first ejection support sections at a plurality of locations thereon in the left-right direction, and
wherein the chemical spraying device comprises a seesaw swing support section that supports the second ejection support section in a manner that enables seesaw swing of the second ejection support section relative to the chemical tank about an axis in line with the front-rear direction.

6. The chemical spraying device according to any one of claims 1 to 5, comprising:
a left-right swing support section that supports the respective first ejection support sections in a manner that enables the first ejection support sections to swing in the left-right direction relative to the second ejection support section about the axes in line with the front-rear direction;
a front-rear swing support section that supports the respective first ejection support sections in a manner that enables the first ejection support sections to swing in the front-rear direction relative to the left-right swing support sections about axes in line with the left-right direction;
a biasing section that exerts a biasing force on the respective first ejection support sections to cause the first ejection support sections to swing frontward and that allows the respective first ejection support sections to swing rearward against the biasing force, when the first ejection support sections swing in the front-rear direction relative to the left-right swing support sections about the axes in line with the left-right direction; and
a swing position restriction section that restricts swing positions of the respective first ejection support sections to use positions by restricting frontward swing of the first ejection support sections through contact of a contact portions with the first ejection support sections and that allows the respective first ejection support sections to swing rearward without the contact portions coming in contact with the first ejection support sections.
